# EUROPÄISCHE PATENTANMELDUNG

(11) **EP 3 370 185 A1**
(43) Veröffentlichungstag der Anmeldung: **05.09.2018**
(21) Anmeldenummer: 18159662.8
(22) Anmeldetag: 02.03.2018
(51) Int. Cl.: G06K 7/10, G06F 1/16

(54) **VORRICHTUNG ZUM IDENTIFIZIEREN VON OBJEKTEN, ERFASSEN VON DATEN UND KONTROLLIEREN VON ARBEITSPROZESSEN, SYSTEM ZUR KONTROLLE LOGISTISCHER PROZESSE, VERFAHREN ZUM BETRIEB DER VORRICHTUNG UND VERWENDUNG DER VORRICHTUNG**

(30) Priorität: 03.03.2017 DE 102017203495
(71) Anmelder: Avus Services GmbH, 70567 Stuttgart (DE)
(72) Erfinder: Weiss, Wilfried, 71034 Böblingen (DE)
(74) Vertreter: Kohler Schmid Möbus Patentanwälte

(57) **Zusammenfassung**

Eine Vorrichtung zum Identifizieren von Objekten, Erfassen von Daten und Kontrollieren von Arbeitsprozessen, umfassend ein Arbeitsbekleidungsteil zum Tragen am Arm und/oder an der Hand, eine im Arbeitsbekleidungsteil integrierte Empfangseinheit (5) zum Empfangen von Signalen der Objekte, ein Lesegerät zum Auslesen der von der Empfangseinheit (5) empfangenen Signale, ist dadurch gekennzeichnet, dass die Vorrichtung ein mobiles Endgerät (9) umfasst, wobei das mobile Endgerät mit einer Auswerte- und Steuereinheit und einer Speichereinheit ausgestattet ist, wobei in dem mobilen Endgerät (9) eine Prozesslogik hinterlegt ist, wobei eine elektrische Verbindung vorhanden ist, mit der das mobile Endgerät (9) mit dem Lesegerät zur Stromversorgung des Lesegeräts und zur Übertragen der erfassten Daten vom Lesegerät zum mobilen Endgerät (9) elektrisch verbindbar ist, wobei die Auswerte- und Steuereinheit dazu eingerichtet ist, die erfassten Daten gemäß einer im mobilen Endgerät (9) hinterlegten Prozesslogik zu prüfen, und dass das Arbeitsbekleidungsteil eine Aufnahme (10) für das mobile Endgerät umfasst, die dazu eingerichtete ist, das mobile Endgerät (9) am Arbeitsbekleidungsteil lösbar zu fixieren.

## Beschreibung

### Hintergrund der Erfindung

Die Erfindung betrifft eine Vorrichtung zum Identifizieren eines Objekts, Erfassen von Daten und Kontrollieren von Arbeitsprozessen, umfassend: ein Arbeitsbekleidungsteil zum Tragen am Arm und/oder an der Hand, eine im Arbeitsbekleidungsteil integrierte Empfangseinheit, insbesondere eine RFID-Antenne, zum Empfangen von Signalen des Objekts und ein Lesegerät zum Auslesen der von der Empfangseinheit empfangenen Signale.

Eine derartige Vorrichtung ist beispielsweise bekannt aus DE 10 2015 111 56 A1
RFID-Lesesysteme dienen der Identifikation von Objekten (z.B. Waren oder Behälter für Waren) und werden unter anderem eingesetzt, um logistische Bewegungen zu automatisieren. Die Objekte sind mit einem RFID-Transponder versehen, der mittels eines RFID-Lesegeräts ausgelesen werden können. Die erfassten Informationen werden z.B. dazu verwendet, die Objekte in die richtigen Lagerregale zu verbringen.

DE 10 2015 111 56 A1 offenbart eine Arbeitsbekleidungseinheit umfassend ein Armband mit einer integrierten Steuereinheit und einem Handschuh mit einem integrierten RFID-Lesegerät und einer Antenne, wobei das Lesegerät mit der Steuereinheit verbindbar ist. Mittels des Lesegeräts werden Werkstücke identifiziert und die Position des Nutzers ermittelt. Der Handschuh umfasst an den Fingerspitzen Sensoren, die als Schalter dienen, um die Lesefunktion des Lesegeräts zu aktivieren. Die Steuereinheit umfasst einen Mikrocomputer, mit Hilfe dessen die Antenne gesteuert wird und von der Antenne detektierte Daten an ein übergeordnetes System übertragen werden. Die ermittelten Informationen werden einer Plausibilitätsprüfung durchgeführt, um dem Nutzer ein Feedback zu geben.

Durch die bekannte Arbeitsbekleidung wird zwar eine handliche Vorrichtung zur Verfügung gestellt, die den Zeitaufwand zur Datenerfassung verringert; die Datenaufnahme- und Akkukapazität sind jedoch entsprechend gering, so dass ein Überprüfen der erfassten Daten hinsichtlich vorgeschriebener Prozessabläufe, insbesondere logistische Abläufe nur in Zusammenhang mit einem externen Computer erfolgen kann. Dementsprechend kann auch das Feedback nur erfolgen, wenn eine Datenverbindung von Arbeitsbekleidung mit dem externen Computer besteht. Im Falle einer fehlenden Verbindung zu diesem externen Computer können keine sofortige Kontrolle und somit auch kein zeitnahes Feedback erfolgen. Zudem besteht die Gefahr, dass der Nutzer vergisst, die Lesefunktion mittels der Sensoren zu aktivieren. Beides kann zu einer erhöhten Fehlerquote führen. Ein weiteres Problem besteht darin, dass zum Wechseln der Steuereinheit zumindest das Armband komplett ausgetauscht werden muss. Aus Hygienegründen müssen daher für jeden Nutzer mindestens zwei dieser Armbänder mit integrierter Steuereinheit vorgehalten werden.

### Aufgabe der Erfindung

Es ist daher Aufgabe der Erfindung eine Vorrichtung bereitzustellen, mit der auf zuverlässige, kostengünstige und einfache Weise Arbeitsprozesse flexibel kontrolliert werden können.

### Beschreibung der Erfindung

Diese Aufgabe wird erfindungsgemäß durch eine Vorrichtung nach Anspruch 1, ein System zur Kontrolle logistischer Prozesse nach Anspruch 11, ein Verfahren nach Anspruch 13 sowie eine Verwendung nach Anspruch 15 gelöst.

Erfindungsgemäß umfasst die Vorrichtung ein mobiles Endgerät, wobei das mobile Endgerät mit einer Auswerte- und Steuereinheit und einer Speichereinheit ausgestattet ist, wobei in dem mobilen Endgerät eine Prozesslogik hinterlegt ist, wobei eine elektrische Verbindung vorhanden ist, mit der das mobile Endgerät mit dem Lesegerät zur Stromversorgung des Lesegeräts und zur Übertragen der erfassten Daten vom Lesegerät zum mobilen Endgerät elektrisch verbindbar ist, und wobei die Auswerte- und Steuereinheit dazu eingerichtet ist, die erfassten Daten gemäß der im mobilen Endgerät hinterlegten Prozesslogik zu prüfen. Erfindungsgemäß umfasst das Arbeitsbekleidungsteil eine Aufnahme für das mobile Endgerät, die dazu eingerichtete ist, das mobile Endgerät am Arbeitsbekleidungsteil lösbar zu fixieren.

Die Objekte sind mit einem auslesbaren Identifizierungsmerkmal, insbesondere einem RFID-Transponder, ausgestattet, welches mittels des Lesegeräts ausgelesen werden kann. Bei den Objekten handelte es sich vorzugsweise um tragbare Objekte, insbesondere um Kleinladungsträger oder Packstücke, die manuell bewegt werden. Darüber hinaus können als Objekte auch handbetätigte Werkzeuge oder andere Objekte, die mit der Hand aufgenommen oder betätigt werden, erfasst werden.

Das Lesegerät ist im Arbeitsbekleidungsteil integriert bzw. befestigbar.

Als "Endgerät" im Sinne der Erfindung wird ein tragbares Endbenutzergerät verstanden, auf dem ein (frei zugängliches) Betriebssystem (z.B. iOS, Microsoft Windows, Unix, Android) installiert ist und auf dem eine Prozesslogik hinterlegt ist, welche die Arbeitsprozesse festlegt. Die mit der erfindungsgemäßen Vorrichtung durchzuführenden Prozesse sind also auf dem mobilen Endgerät hinterlegt und können auf diesem dargestellt und mittels der Auswerte- und Steuereinheit des mobilen Endgeräts direkt verarbeitet und entsprechend der hinterlegten Prozesslogik ausgewertet werden. Mittels der erfindungsgemäßen Vorrichtung kann somit die Kontrolle der Arbeitsprozesse autark durchgeführt werden, d.h. unabhängig von einer Datenverbindung zu einem übergelagerten System Das mobile Endgerät kann zwar mit einem übergelagerten System (z.B. einem Zentralrechner) über WLAN oder Bluetooth verbunden werden, in welchem die erfassten und/oder ausgewerteten Daten gespeichert und mit Daten von anderen mobilen Endgeräten zusammengeführt werden können, ist aber aufgrund der oben genannten Eigenschaften in der Lage, auch ohne ein solches übergeordnetes System, logistische Abläufe gemäß der hinterlegten Prozesslogik zu steuern. Auf diese Weise wird eine Offline-Überprüfung der geschäftlichen Prozesse ermöglicht. Der Bediener kann somit von der erfindungsgemäßen Vorrichtung sofort ein Feedback erhalten unabhängig von einer aktuellen Verbindung zum übergelagerten System (Offline-Überprüfung), also bspw. auch bei fehlender WLAN-Verbindung oder in einem Funkloch.

Das mobile Endgerät ist darüber hinaus mit Schnittstellen versehen, welche eine kabelgebundenen Eingabe und Ausgabe von Daten ermöglicht (z.B. USB-Schnittstelle). Vorzugsweise ist das mobile Endgerät dazu ausgebildet, Anwendungen durch den Nutzer zu parametrisieren, insbesondere durch manuelle Eingriffe während des Arbeitsprozesses.

Das mobile Endgerät kann z.B. als Handheld, Industrie Device (mobiles Endgerät nach Industriestandard) oder als Smartphone ausgebildet sein.

Im Gegensatz zu dem aus dem Stand der Technik bekannte Vorrichtungen ist bei der erfindungsgemäßen Vorrichtung das mobile Endgerät nicht in dem Arbeitsbekleidungsteil integriert, sondern auf dem Arbeitsbekleidungsteil abnehmbar befestigt (bspw. mittelseiner Einsteckhülle oder einer Klemm- oder Rastverbindung). Das Endgerät kann daher auf einfache Weise ausgetauscht werden, z.B. zum Aufladen des Akkus, zum Ersetzen eines alten Modells durch eine neues, oder zum Austausch des Endgeräts aufgrund einer geänderten Anforderung (andere Arbeitsprozesse, anderer Benutzer). Das Arbeitsbekleidungsteil muss bei einem Austausch des Endgeräts nicht aus dem Betrieb genommen werden, sondern kann vom selben Nutzer weiterverwendet werden. Da lediglich das Endgerät ohne Teile des Arbeitsbekleidungsteils bei Bedarf ausgetauscht werden können, kann das Endgerät durch einen anderen Nutzer verwendet werden, ohne dass eine Reinigung des Arbeitsbekleidungsteils vorgenommen werden muss.

Durch die Verwendung eines abnehmbaren mobilen Endgeräts mit hinterlegter Prozesslogik wird eine vollautomatische Kontrolle von Arbeitsabläufen ermöglicht sowie die Flexibilität und Einsatzmöglichkeiten der Vorrichtung erheblich erhöht.

Bei einer besonders bevorzugten Ausführungsform ist das Lesegerät dazu eingerichtet, in einem Betriebsmodus Daten mit einer vorgebbaren Taktfrequenz auszulesen und das mobile Endgerät ist dazu eingerichtet das Lesegerät zu steuern. Der Betriebsmodus wird vorzugsweise dadurch aktiviert, dass das mobile Endgerät eingeschaltet wird. Die Taktfrequenz kann bspw. durch die Prozesslogik vorgegeben werden. Das Lesegerät muss nicht für jeden Lesevorgang aktiviert separat werden, sondern ist jederzeit einsatzbereit. Die Gefahr einer Fehlbedienung durch den Nutzer kann dadurch verringert werden.

Besonders vorteilhaft ist es, wenn das Lesegerät dazu eingerichtet ist, die Taktfrequenz zu variieren. Der Abstand der Leseintervalle kann dann bspw. auf die Betriebssituation angepasst werden.

Vorzugsweise umfasst das mobile Endgerät ein Display und ist dazu eingerichtet, in Abhängigkeit von dem Ergebnis der Prüfung der Daten gemäß der im mobilen Endgerät hinterlegten Prozesslogik ein Feedback anzuzeigen. Das Feedback kann mittels lesbarer Schrift und/oder Piktogrammen erfolgen.

Eine bevorzugte Ausführungsform sieht vor, dass das Arbeitsbekleidungsteil eine Handmanschette oder einen Handschuh umfasst mit einem Arminnenseitenabschnitt, einem Handinnenflächenabschnitt und einem Handrückenabschnitt. Die Ausführung als Handmanschette ist besonders vorteilhaft, da diese über den eigentlichen Arbeitshandschuh getragen werden kann und somit ohne Einbuße bzgl. des Hygienestandards auch von unterschiedlichen Benutzern verwendet werden kann.

Das Lesegerät ist vorzugsweise am oder im Handrückenabschnitt, die Empfangseinheit am oder im Handinnenflächenabschnitt, insbesondere im Bereich eines im Arbeitsbekleidungsteil aufzunehmenden Handballens eines Nutzers, angeordnet. So kann das Objekt beim Anfassen identifiziert werden.

Die Aufnahme für das mobile Endgerät ist vorzugsweise am oder im Arminnenseitenabschnitt angeordnet. Mit dieser Anordnung kann ein Endgerät mit einem großen Display bequem getragen und das Display in einer ergonomischen Armhaltung abgelesen werden.

Alternativ hierzu kann die Aufnahme für das mobile Endgerät Teil eines Armbandes sein. Das Armband ist vorzugsweise vom Arbeitsbekleidungsteil abnehmbar und/oder gegenüber dem Arbeitsbekleidungsteil variabel positionierbar. Auf diese Weise kann die Position des mobilen Endgerätes variiert werden.

Bei einer besonderen Ausführungsform der erfindungsgemäßen Vorrichtung umfasst die Empfangseinheit mindestens zwei RFID-Antennen. Die beiden RFID-Antennen können beide am Handinnenflächenabschnitt angeordnet sein, um den Lesebereich zu vergrößern oder auf verschiedenen Seiten (Handinnenflächenabschnitt und Handrückenabschnitt) um die Flexibilität der Anordnung zu erhöhen. Zudem kann unterschieden werden, von welcher Antenne die jeweiligen Signale empfangen wurden, wodurch zusätzliche Informationen bzgl. des Objekts erhalten werden, insbesondere wenn unterschiedliche Objekte von den unterschiedlichen Antennen erfasst werden sollen.

Das mobile Endgerät weist vorzugsweise eine Datenbank auf, die bspw. über WLAN, Bluetooth oder über einen lokalen Editor aktualisierbar ist.

Die Erfindung betrifft auch ein System zur Kontrolle logistischer Prozesse umfassend: eine vorgegebene Anzahl an Ladungsträgern zum Zusammenfassen von Gütern zu Ladeeinheiten, wobei jeder Ladungsträger mit einem mittels des Lesegeräts auslesbaren eineindeutigen Identifikationsmerkmal versehen ist, und eine zuvor beschriebene Vorrichtung. Durch die eineindeutige Identifikationsmerkmals kann eine eindeutige Zuordnung eines Identifikationsmerkmals zu einem bestimmten Ladungsträger erfolgen, was bspw. eine Rückverfolgung des Ladungsträgers ermöglicht.

Vorzugsweise handelt es sich um ein geschlossenes System, d.h. es wird eine begrenzte Anzahl an zulässigen Identifikationsmerkmalen (z.B. ein eingeschränkter Nummernkreis) vergeben. Das mobile Endgerät ist so konfiguriert, dass nicht zulässige Identifikationsmerkmale ignoriert werden. Die ermöglicht die Identifikation der Ladungsträger, ohne die darin befindlichen Waren zu erfassen.

Die Erfindung betrifft auch ein Verfahren zur Verwendung der zuvor beschriebenen Vorrichtung mit einem Arbeitsbekleidungsteil zum Tragen am Arm und/oder an der Hand, einer im Arbeitsbekleidungsteil integrierten Empfangseinheit, einem (vorzugsweise im Arbeitsbekleidungsteil integrierten) Lesegerät und mit einem am Arbeitsbekleidungsteil lösbar befestigbaren mobilen Endgerät, wobei das Verfahren folgende Verfahrensschritte umfasst: Hinterlegen einer Prozesslogik in dem mobilen Endgerät; Versorgung des Lesegeräts mit Strom über das mobile Endgerät; periodisches Starten von Lesevorgänge mit einer vorgebbaren, insbesondere variablen, Taktfrequenz, sobald sich das Lesegerät in einem Betriebsmodus befindet; Übertragung der vom Lesegerät ausgelesene Daten an das mobile Endgerät, und Überprüfung der Daten hinsichtlich Erfüllung von durch die hinterlegte Prozesslogik definierten Anforderungen durch das mobile Endgerät.

Wenn die erfindungsgemäße Vorrichtung verwendet wird (Betriebsmodus) ist das mobile Endgerät mittels der Aufnahme am Arbeitsbekleidungsstück lösbar fixiert.

Mittels des mobilen Geräts wird überprüft, ob in der Prozesslogik definierte Prozessschrittes korrekt ausgeführt wurden. Gemäß dem erfindungsgemäßen Verfahren ist die Vorrichtung permanent einsatzbereit. Sobald sich die Vorrichtung im Betriebsmodus befindet, ist also keine Aktion erforderlich, um einen Lesevorgang zu starten.

Durch das periodische Starten des Lesevorgangs und der Überprüfung der Daten durch das mobile Endgerät werden eine einfache Bedienung und eine vollautomatische Erfassung von logistischen Abläufen realisiert. Auf eine umfangreiche Einweisung der Bediener kann verzichtet werden.

Vorzugsweise wird die Taktfrequenz situationsabhängig variiert. Die Taktfrequenz kann an verschiedene Prozesse, Bediener oder aktuelle Tätigkeiten des Bedieners angepasst werden. Bspw. kann im mobilen Endgerät hinterlegt werden, dass der Abfragezyklus automatisch verlängert (und somit der Stromverbrauch reduziert) wird, wenn innerhalb eines vorgegebenen Intervalls kein Transponder erkannt wird; oder dass die Taktfrequenz verringert wird, wenn die erfindungsgemäße Vorrichtung feststellt, dass der Bediener gerade ein Fahrzeug bedient. Dies erfolgt erfindungsgemäß automatisch, so dass der Anwender dies nicht steuern muss. Auf diese Weise kann einerseits die Verfügbarkeit der Vorrichtung und andererseits der Stromverbrauch optimiert werden.

Vorzugsweise zeigt das mobile Endgerät ein Feedback in Abhängigkeit von dem Ergebnis der Überprüfung an, insbesondere auf einem Display.

Bei einer besonders bevorzugten Variante des erfindungsgemäßen Verfahrens wird die Taktfrequenz situationsabhängig variiert, z.B. in Abhängigkeit von vorgegebenen Betriebssituationen, und/oder in Abhängigkeit vom Benutzer.

Die Erfindung betrifft auch eine Verwendung der zuvor beschriebenen Vorrichtung zum Erfassen und Kontrollieren von Ladungsträgern, insbesondere zur Rückverfolgung von Ladungsträgern.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt die Unterseite (Sicht auf die Handinnenfläche) der erfindungsgemäßen Vorrichtung.
- Fig. 2: zeigt die Oberseite (Sicht auf den Handrücken) der erfindungsgemäßen Vorrichtung.
- Fig. 3: zeigt eine in einem Armband integrierte Aufnahme für ein mobiles Endgerät.
- Fig. 4: zeigt eine schematische Darstellung des Betriebsverfahrens einer erfindungsgemäßen Vorrichtung.

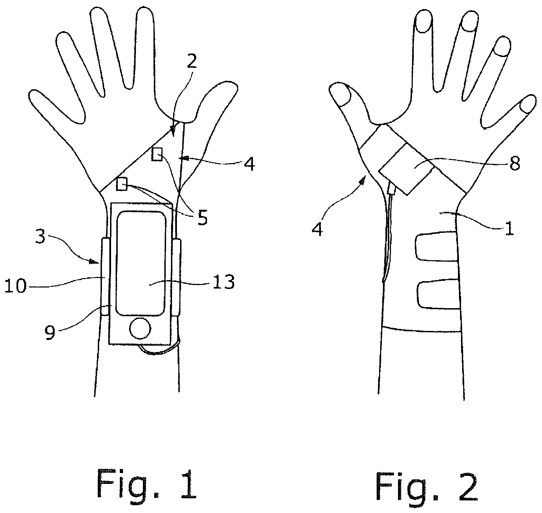

In **Fig. 1** und **Fig. 2** ist eine besonders bevorzugte Ausführungsform der erfindungsgemäßen Vorrichtung gezeigt. Die Vorrichtung umfasst ein Arbeitskleidungsteil in Form einer Handmanschette **1,** die einen Handinnenflächenabschnitt **2,** einen Arminnenseitenabschnitt **3** und einen Handrückenabschnitt **4** aufweist. Eine Empfangseinheit **5** (hier umfassend zwei RFID-Antennen) ist am Handinnenflächenabschnitt 2 angeordnet, so dass beim Anfassen eines mit einem auslesbaren Identifikationsmerkmal **7** ausgestatteten Objekts 6 Signale detektiert werden können, die von dem Identifikationsmerkmal 7 ausgehen. Die Empfangseinheit 5 ist mit einem Lesegerät **8** elektrisch verbunden, welches die während eines Lesevorgangs detektierten Signale ausliest. Im Falle eines RFID-Lesegeräts werden bei einem solchen Lesevorgang in einem vorgegebenen Leseintervall (in der Regel zwischen 1/10 s bis zu 5 s) magnetische Wechselfelder oder hochfrequente Radiowellen von der Empfangseinheit 5 ausgesandt, welche von einem Identifikationsmerkmal (Transponder) moduliert und dadurch von der Empfangseinheit detektiert werden.

Das Lesegerät 8 ist im Bereich des Handrückenabschnitts 4 der Handmanschette 1 angeordnet und mit einem mobilen Endgerät **9** elektrisch verbunden, so dass Daten zwischen dem Endgerät 9 und dem Lesegerät 8 ausgetauscht werden können. Das Endgerät 9 ist mittels einer Aufnahme **10 i**m Bereich des Arminnenseitenabschnitts lösbar mit der Handmanschette 1 verbunden (z.B. durch Einstecken in eine Hülle oder Fixieren mittels Klettverschluss).

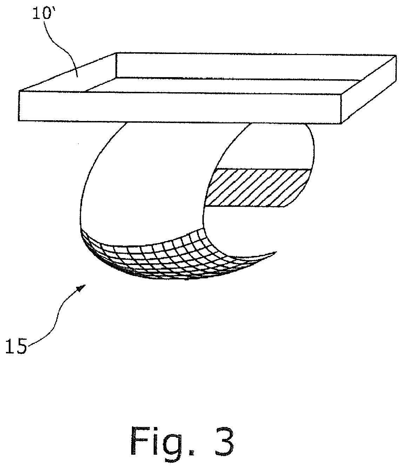

**Fig. 3** zeigt eine besondere Ausführungsform einer Aufnahme 10' für das mobile Endgerät 9. Die Aufnahme 10' ist Teil eines Armbandes 15, welches über dem Arbeitsbekleidungsteil 1 getragen werden kann. Das mobile Endgerät 9 kann in die Aufnahme 10' eingerastet werden und variabel am Arm angebracht werden, z.B. an der Arminnenseite oder der Armaußenseite.

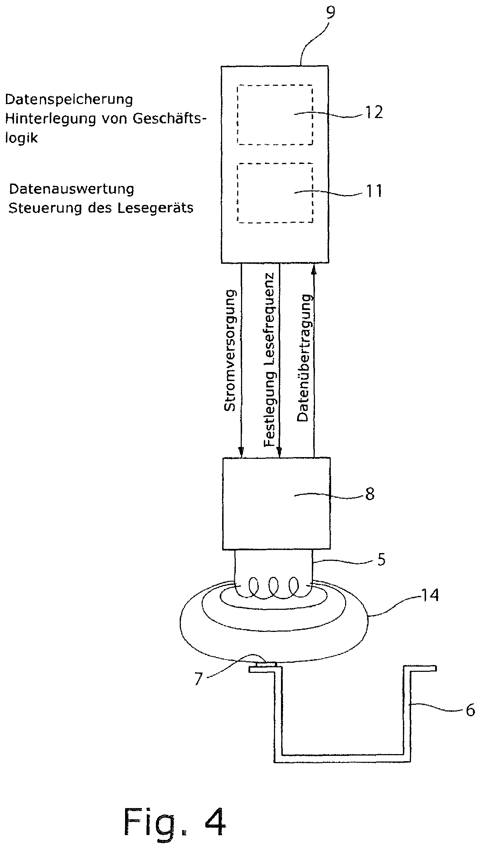

**Fig. 4** zeigt schematisch die im Betrieb der erfindungsgemäßen Vorrichtung ablaufenden Vorgänge.

Bei Inbetriebnahme der Vorrichtung wird die Vorrichtung in einen Betriebsmodus versetzt, in dem das Lesegerät 8 in einer vorgegebenen Taktfrequenz periodisch Lesevorgänge durchführt. Es werden also Leseintervalle periodisch wiederholt, ohne dass jedes Leseintervall separat aktiviert werden muss. Die von der Empfangseinheit 5 detektierten Signale werden vom Lesegerät 8 ausgelesen und an das mobile Endgerät 9 übermittelt. Das mobile Endgerät 9 ist mit einer Auswerte- und Steuereinheit **11** und einer Speichereinheit **12** ausgestattet (in Fig. 3 gestrichelt angedeutet). Erfindungsgemäß ist auf dem mobilen Endgerät 9 eine Prozesslogik hinterlegt, welche logistische Abläufe festlegt. Die Prozesslogik kann von Anwendungsfall zu Anwendungsfall unterschiedlich ausgestaltet sein. Bspw. ist ein Fall denkbar, bei dem nach dem eindeutigen Erkennen des Objekts 6 ein Regalplatz identifiziert werden muss, in dem das Objekt 6 abgelegt werden soll. Beides (Identifizierung des Objekts und Identifizierung des Regalplatzes) kann durch Auslesen eines entsprechenden Identifikationsmerkmals erfolgen. In einem anderen denkbaren Fall wird das Erkennen des Objekts 6 lediglich erfasst. In wieder einem anderen Fall kann vorgeschrieben sein, dass eine bestimmte Reihenfolge der erfassten Objekte 6 eingehalten werden muss. Anhand der vom Lesegerät 8 übermittelten Daten überprüft das mobile Endgerät 9, ob die vorgeschriebenen Abläufe gemäß Prozesslogik korrekt ausgeführt wurden und übermittelt dem Nutzer ein Feedback, bspw. durch Anzeigen einer Nachricht auf einem Display **13** des mobilen Endgeräts 9.

Durch das mobile Endgerät kann die Taktfrequenz des Lesegeräts variiert werden, mit der das Lesegerät Lesesignale **14** aussendet. Dies kann manuell durch Eingabe erfolgen oder automatisch in Abhängigkeit von einem Parameter, der bspw. aus dem mobilen Gerät zugänglichen Daten ermittelt wird, z.B. Daten, die das Lesegerät oder ein anders mit dem mobilen Endgerät verbundenes Gerät an das mobile Endgerät übermittelt oder Daten, die das mobile Endgerät selbst ermittelt.

Als Parameter kann bspw. der Aufenthaltsort (GPS-Daten), die aktuelle Tätigkeit des Nutzers dienen. So kann beispielsweise die Frequenz verringert werden, wenn die Auswerte- und Steuereinheit feststellt, dass der Nutzer ein Fahrzeug bedient oder sich an einem Ort aufhält der bzgl. der mit der Prozesslogik hinterlegten Abläufe nicht relevant ist. Auf diese Weise kann die Vorrichtung stromsparend betrieben werden und trotzdem in betriebsrelevanten Situationen eine hohe Verfügbarkeit gewährleistet werden.

Die erfindungsgemäße Vorrichtung umfasst eine intelligente Rechnereinheit, auf der durchzuführende Prozessschritte, insbesondere von mehrstufigen Prozessen, gespeichert sind und angezeigt werden können. Zusätzlich wird die Abarbeitung der Prozessschritte (z.B. Kommissionierung oder Milkrum Verfahren) erfasst, gesteuert und überprüft. Erfindungsgemäß kann dies autark, ohne vor- oder nachgeschaltetem IT-System erfolgen.

### Bezugszeichenliste

- 1: Handmanschette/Arbeitsbekleidungsteil
- 2: Handinnenflächenabschnitt
- 3: Arminnenseitenabschnitt
- 4: Handrückenabschnitt
- 5: Empfangseinheit
- 6: Objekt
- 7: Identifikationsmerkmal
- 8: Lesegerät
- 9: mobiles Endgerät
- 10, 10': Aufnahme für mobiles Endgerät
- 11: Auswerte-und Steuereinheit
- 12: Speichereinheit
- 13: Display
- 14: Lesesignale
- 15: Armband mit Aufnahme für mobiles Endgerät

## Patentansprüche

1. Vorrichtung zum Identifizieren von Objekten (6), Erfassen von Daten und Kontrollieren von Arbeitsprozessen, umfassend:
ein Arbeitsbekleidungsteil (1) zum Tragen am Arm und/oder an der Hand,
eine im Arbeitsbekleidungsteil (1) integrierte Empfangseinheit (5), insbesondere eine RFID-Antenne, zum Empfangen von Signalen der Objekte (6),
ein Lesegerät (8) zum Auslesen der von der Empfangseinheit (5) empfangenen Signale, insbesondere ein RFID-Lesegerät,
**dadurch gekennzeichnet,**
**dass** die Vorrichtung ein mobiles Endgerät (9) umfasst,
wobei das mobile Endgerät mit einer Auswerte- und Steuereinheit (11) und einer Speichereinheit (12) ausgestattet ist,
wobei in dem mobilen Endgerät (9) eine Prozesslogik hinterlegt ist, wobei eine elektrische Verbindung vorhanden ist, mit der das mobile Endgerät (9) mit dem Lesegerät zur Stromversorgung des Lesegeräts (8) und zur Übertragen der erfassten Daten vom Lesegerät (8) zum mobilen Endgerät (9) elektrisch verbindbar ist,
wobei die Auswerte- und Steuereinheit (11) dazu eingerichtet ist, die erfassten Daten gemäß einer im mobilen Endgerät (9) hinterlegten Prozesslogik zu prüfen,
**dass** das Arbeitsbekleidungsteil (1) eine Aufnahme (10) für das mobile Endgerät umfasst, die dazu eingerichtete ist, das mobile Endgerät (9) am Arbeitsbekleidungsteil (1) lösbar zu fixieren.

2. Vorrichtung nach Anspruch 1, **dadurch gekennzeichnet, dass** das Lesegerät (8) dazu eingerichtet ist, Daten mit einer vorgebbaren Taktfrequenz auszulesen und das mobile Endgerät (9) dazu eingerichtet ist, das Lesegerät (8) zu steuern.

3. Vorrichtung nach Anspruch 2, **dadurch gekennzeichnet, dass** das Lesegerät (8) dazu eingerichtet ist, die Taktfrequenz zu variieren.

4. Vorrichtung nach einem der vorhergehenden Ansprüche, **dadurch gekennzeichnet, dass** das mobile Endgerät (9) ein Display (13) umfasst und dazu eingerichtet ist, in Abhängigkeit von dem Ergebnis der Prüfung der Daten gemäß der im mobilen Endgerät (9) hinterlegten Prozesslogik ein Feedback anzuzeigen.

5. Vorrichtung nach einem der vorhergehenden Ansprüche, **dadurch gekennzeichnet, dass** es sich bei dem mobilen Endgerät (9) um ein Handheld, ein Industrie Device oder ein Smartphone handelt.

6. Vorrichtung nach einem der Ansprüche 1 bis 5, **dadurch gekennzeichnet, dass** das Arbeitsbekleidungsteil (1) eine Handmanschette oder einen Handschuh umfasst mit einem Arminnenseitenabschnitt (3), einem Handinnenflächenabschnitt (2) und einem Handrückenabschnitt (4).

7. Vorrichtung nach Anspruch 6, **dadurch gekennzeichnet, dass** die Aufnahme für das mobile Endgerät (9) am oder im Arminnenseitenabschnitt (3) angeordnet ist.

8. Vorrichtung nach Anspruch 6, **dadurch gekennzeichnet, dass** die Aufnahme (10) für das mobile Endgerät Teil des eines Armbandes ist.

9. Vorrichtung nach einem der vorhergehenden Ansprüche, **dadurch gekennzeichnet, dass** die Empfangseinheit (5) mindestens zwei RFID-Antennen umfasst.

10. Vorrichtung nach einem der vorhergehenden Ansprüche, **dadurch gekennzeichnet, dass** das mobile Endgerät (9) eine Datenbank aufweist, die vorzugsweise über WLAN oder Bluetooth aktualisierbar ist.

11. System zur Kontrolle logistischer Prozesse umfassend:
eine vorgegebene Anzahl an Ladungsträgern zum Zusammenfassen von Gütern zu Ladeeinheiten, wobei jeder Ladungsträger mit einem mittels des Lesegeräts auslesbaren eineindeutigen Identifikationsmerkmal versehen ist, und
eine Vorrichtung gemäß einem der vorhergehenden Ansprüche.

12. System nach Anspruch 11, **dadurch gekennzeichnet, dass** es sich um ein geschlossenes System handelt.

13. Verfahren zum Betrieb einer Vorrichtung nach einem der vorhergehenden Ansprüche mit einem Arbeitsbekleidungsteil (1) zum Tragen am Arm und/oder an der Hand, einer im Arbeitsbekleidungsteil (1) integrierten Empfangseinheit (5), einem Lesegerät (8) und am Arbeitsbekleidungsteil (1) lösbar befestigbaren mobilen Endgerät (9), wobei das Verfahren folgende Verfahrensschritte umfasst:
• Hinterlegen einer Prozesslogik in dem mobilen Endgerät (9);
• Versorgung des Lesegeräts (8) mit Strom über das mobile Endgerät (9);
• periodisches Starten von Lesevorgänge mit einer vorgebbaren, insbesondere variablen, Taktfrequenz, sobald sich das Lesegerät (8) in einem Betriebsmodus befindet;
• Übertragung der vom Lesegerät (8) ausgelesene Daten an das mobile Endgerät (9), und
• Überprüfung der Daten hinsichtlich Erfüllung von durch die hinterlegte Prozesslogik definierten Anforderungen durch das mobile Endgerät (9).

14. Verfahren, nach Anspruch 13, **dadurch gekennzeichnet, dass** die Taktfrequenz situationsabhängig variiert wird.

15. Verwendung der Vorrichtung nach einem der Ansprüche 1 bis 10 zum Erfassen und Kontrollieren von Ladungsträgern, insbesondere zur Rückverfolgung von Ladungsträgern.
